# EUROPEAN PATENT APPLICATION

(11) **EP 2 471 887 A1**
(43) Date of publication of application: **04.07.2012**
(21) Application number: 12162060.3
(22) Date of filing: 11.03.2008
(51) Int. Cl.: C09K 8/54, C09K 8/74, C09K 8/68

(54) **Improved corrosion-inhibiting additives, treatment fluids and associated methods**

(30) Priority: 12.03.2007 US 716935; 12.03.2007 US 716774
(62) Divisional of application: 08718692.0
(71) Applicant: Halliburton Energy Services, Inc., Duncan, OK 73533 (US)
(72) Inventor: Welton, Thomas D., Duncan, OK 73533 (US)
(74) Representative: Cottrill, Emily Elizabeth Helen

(57) **Abstract**

Corrosion-inhibiting additives comprising certain surfactants, and associated treatment fluids and methods of use are described. In one embodiment, the method comprises: providing a treatment fluid that comprises a base fluid, an α,β-unsaturated aldehyde, a sulfur-containing compound, and at least one nitrogen-containing surfactant that is anionic, nonionic, amphoteric, or zwitterionic; and introducing the treatment fluid into a subterranean formation. In another embodiment, the method comprises: providing a corrosion-inhibiting additive that comprises an α,β-unsaturated aldehyde, a sulfur-containing compound, and at least one nitrogen-containing surfactant that is anionic, nonionic, amphoteric, or zwitterionic; contacting a surface with the corrosion-inhibiting additive; and allowing the corrosion-inhibiting additive to interact with the surface, whereby corrosion of the surface is at least partially inhibited or a portion of an undesirable substance on the surface is removed.

## Description

### BACKGROUND

The present invention relates to additives and treatment fluids that may be useful in subterranean operations, and more specifically, to corrosion-inhibiting additives that comprise certain surfactants, and associated treatment fluids and methods of use.

Acidic fluids may be present in a multitude of operations in the oil and chemical industry. Acidic fluids are often used as a treating fluid in wells penetrating subterranean formations. Such acidic treatment fluids may be used in, for example, clean-up operations or stimulation operations for oil and gas wells. Acidic stimulation operations may use these treatment fluids in hydraulic fracturing and matrix acidizing treatments. Moreover, many treatment fluids include a water source that may incidentally contain certain amounts of acid, which may cause the treatment fluid to be at least slightly acidic. As used herein, the term "treatment fluid" refers to any fluid that may be used in an application in conjunction with a desired function and/or for a desired purpose. The term "treatment" does not imply any particular action by the fluid or any component thereof.

Acidic treatment fluids may include a variety of acids such as, for example, hydrochloric acid, acetic, acid, formic acid, hydrofluoric acid, and the like. In these operations, metal surfaces in piping, tubing, heat exchangers, and reactors may be exposed to acidic fluids. While acidic treatment fluids may be useful for a variety of downhole operations, acidic treatment fluids can be problematic in that they can cause corrosion to downhole casing or tubing, downhole tools, and other surfaces (*e.g.,* metal surfaces) in a subterranean formation. As used herein, the term "corrosion" refers to any reaction between a material and its environment that causes some deterioration of the material or its properties. Examples of common types of corrosion include, but are not limited to, the rusting of metal, the dissolution of a metal in an acidic solution, oxidation of a metal, chemical attack of a metal, electrochemical attack of a metal, and patina development on the surface of a metal. As used herein, the term "inhibit" refers to lessening the tendency of a phenomenon (*e.g.,* corrosion) to occur and/or the degree to which that phenomenon occurs. The term "inhibit" does not imply any particular degree or amount of inhibition.

To combat this potential corrosion problem, an assortment of corrosion inhibitors have been used to reduce or prevent corrosion to downhole metals and metal alloys with varying levels of success. A difficulty encountered with the use of some corrosion inhibitors is the limited temperature range over which they may function effectively. For instance, certain conventional antimony-based inhibitor formulations have been limited to temperatures above 270°F and do not appear to function effectively below this temperature.

Another drawback of some conventional corrosion inhibitors is that certain components of these corrosion inhibitors may not be compatible with the environmental standards in some regions of the world. For example, quaternary ammonium compounds, mercaptan-based compounds, and "Mannich" condensation compounds have been used as corrosion inhibitors. However, these compounds generally are not acceptable under stricter environmental regulations, such as those applicable in the North Sea region or other regions. Consequently, operators in some regions may be forced to suffer increased corrosion problems, resort to using corrosion inhibitor formulations that may be less effective, or forego the use of certain acidic treatment fluids entirely.

### SUMMARY

The present invention relates to additives and treatment fluids that may be useful in subterranean operations, and more specifically, to corrosion-inhibiting additives that comprise certain surfactants, and associated treatment fluids and methods of use.

In one aspect, the present invention provides a treatment fluid comprising: a base fluid; an α,β-unsaturated aldehyde; a sulfur-containing compound; and a nitrogen-containing surfactant that is anionic, nonionic, amphoteric, or zwitterionic.

In another aspect, the present invention provides a corrosion-inhibiting additive comprising: an α,β-unsaturated aldehyde; a sulfur-containing compound; and a nitrogen-containing surfactant that is anionic, nonionic, amphoteric, or zwitterionic.

In another aspect, the present invention provides a corrosion-inhibiting additive system comprising: a first component that comprises an α,β-unsaturated aldehyde and a nitrogen-containing surfactant that is anionic, nonionic, amphoteric, or zwitterionic; and a second component that comprises a sulfur-containing compound.

In another aspect, the present invention provides a method comprising: providing a treatment fluid that comprises a base fluid, an α,β-unsaturated aldehyde, a sulfur-containing compound, and at least one nitrogen-containing surfactant that is anionic, nonionic, amphoteric, or zwitterionic; and introducing the treatment fluid into a subterranean formation.

In another aspect, the present invention provides a method comprising: providing a corrosion-inhibiting additive that comprises an α,β-unsaturated aldehyde, a sulfur-containing compound, and at least one nitrogen-containing surfactant that is anionic, nonionic, amphoteric, or zwitterionic; contacting a surface with the corrosion-inhibiting additive; and allowing the corrosion-inhibiting additive to interact with the surface, whereby corrosion of the surface is at least partially inhibited.

In another aspect, the present invention provides a method comprising: providing a treatment fluid that comprises a base fluid, an α,β-unsaturated aldehyde, a sulfur-containing compound, and at least one nitrogen-containing surfactant that is anionic, nonionic, amphoteric, or zwitterionic; providing a surface wherein an undesirable substance resides on the surface; and allowing the treatment fluid to contact the surface so that at least a portion of the undesirable substance is removed.

The features and advantages of the present invention will be apparent to those skilled in the art. While numerous changes may be made by those skilled in the art, such changes are within the spirit of the invention.

### DESCRIPTION OF PREFERRED EMBODIMENTS

The present invention relates to additives and treatment fluids that may be useful in subterranean operations, and more specifically, to corrosion-inhibiting additives that comprise certain surfactants, and associated treatment fluids and methods of use.

The corrosion-inhibiting additives and treatment fluids of the present invention generally comprise an α,β-unsaturated aldehyde, a sulfur-containing compound, and a nitrogen-containing surfactant. The corrosion-inhibiting additives of the present invention may be used along or in conjunction with a treatment fluid, among other purposes, to inhibit the corrosion of one or more surfaces. As used herein, the term "corrosion" refers to any reaction between a material and its environment that causes some deterioration of the material or its properties. Examples of common types of corrosion include, but are not limited to, the rusting of metal, the dissolution of a metal in an acidic solution, oxidation of a metal, chemical attack of a metal, electrochemical attack of a metal, and patina development on the surface of a metal. As used herein, the term "inhibit" refers to lessening the tendency of a phenomenon (*e.g.,* corrosion) to occur and/or the degree to which that phenomenon occurs. The term "inhibit" does not imply any particular degree or amount of inhibition. In certain embodiments, the corrosion-inhibiting additives and treatment fluids of the present invention may be used to inhibit corrosion, among other places, on metal surfaces in subterranean formations, downhole casing, tubing, tools, pipelines, and the like.

Among the possible advantages of the corrosion-inhibiting additives and treatment fluids of the present invention are that they may be more effective than corrosion inhibitors heretofore used and/or may possess desirable environmental properties for use in downhole environments, especially those that may be subject to more stringent environmental regulations. Another advantage of the corrosion-inhibiting additives and treatment fluids of the present invention is that they may impart or exhibit both enhanced corrosion inhibition and enhanced surface-active properties (*e.g.*, emulsion stability, dispersion stability, wettability, foam stability, foaming resistance, etc.) due, at least in part, to the presence of the surfactant in the corrosion-inhibiting additive itself, without the need for multiple additives to provide these enhanced properties.

The corrosion-inhibiting additives and treatment fluids of the present invention generally comprise an α,β-unsaturated aldehyde. Examples of α,β-unsaturated aldehydes that may be suitable in certain embodiments of the present invention include, but are not limited to cinnamaldehyde (*e.g., t*-cinnamaldehyde), crotonaldehyde, acrolein, methacrolein, leafaldehyde, citral, furfural, (E)-2-methyl-2-butenal, 3-methyl-2-butenal, (E)-2-ethyl-2-butenal, (E)-2-ethyl-2-hexenal, 2-hexenal, 2-heptenal, 2-octenal, 2-nonenal, 2-decenal, 2-undecenal, 2-dodecenal, 2,4-hexadienal, 2,4-heptadienal, 2,4-octadienal, 2,4-nonadienal, 2,4-decadienal, 2,4-undecadienal, 2,4-dodecadienal, 2,6-dodecadienal, 1-formyl-[2-(2-methylvinyl)]-2-n-octylethylene, dicinnamaldehyde, p-hydroxycinnamaldehyde, p-methylcinnamaldehyde, p-ethylcinnamaldehyde, p-methoxycinnamaldehyde, p-dimethylaminocinnamaldehyde, p-diethylaminocinnamaldehyde, p-nitrocinnamaldehyde, o-nitrocinnamaldehyde, o-allyloxycinnamaldehyde, 4-(3-propenal)cinnamaldehyde, p-sodium sulfocinnamaldehyde, p-trimethylammoniumcinnamaldehyde sulfate, p-trimethylammoniumcinnamaldehyde o-methylsulfate, p-thiocyanocinnamaldehyde, p-(S-acetyl)thiocinnamaldehyde, p-(S-N,N-dimethylcarbamoylthio)cinnamaldehyde, p-chlorocinnamaldehyde, 5-phenyl-2,4-pentadienal, 5-(p-methoxyphenyl)-2,4-pentadienal, 2,3-diphenylacrolein, 3,3-diphenylacrolein, α -methylcinnamaldehyde, β-methylcinnamaldehyde, α -chlorocinnamaldehyde, α -bromocinnamaldehyde, α -butylcinnamaldehyde, α-amylcinnamaldehyde, α -hexylcinnamaldehyde, 2-(p-methylbenzylidine)decanal, α-bromo-p-cyanocinnamaldehyde, α -ethyl-p-methylcinnamaldehyde, p-methyl- α - pentylcinnamaldehyde, 3,4-dimethoxy- α -methylcinnamaldehyde, α -[(4-methylphenyl)methylene]benzeneacetaldehyde, α -(hydroxymethylene)-4-methylbenzylacetaldehyde, 4-chloro- α -(hydroxymethylene)benzeneacetaldehyde, α-nonylidenebenzeneacetaldehyde, derivatives thereof, combinations thereof, and the like. Examples of α,β-unsaturated aldehydes and derivatives thereof that may be suitable for use in the present invention are described in the following U.S. patents, the relevant disclosures of which hereby are incorporated by reference: U.S. Patent No. 3,589,860 to Foroulis; U.S. Patent No. 4,734,259 to Frenier et al.; U.S. Patent No. 4,784,796 to Treybig et al.; U.S. Patent No. 5,120,471 to Jasinski et al.; U.S. Patent No. 5,366,643 to Walker; U.S. Patent No. 5,543,388 to Williams et al.; U.S. Patent No. 5,697,443 to Brezinski et al.; U.S. Patent No. 6,068,056 to Frenier et al.; U.S. Patent No. 6,117,364 to Vorderbruggen et al.; U.S. Patent No. 6,180,057 to Taylor et al*.*; and U.S. Patent No. 6,399,547 to Frenier et al. The term "derivative," as used herein, includes any compound that is made from one of the listed compounds, for example, by replacing one atom in the listed compound with another atom or group of atoms, rearranging two or more atoms in the listed compound, ionizing one of the listed compounds, or creating a salt of one of the listed compounds.

In certain embodiments, the α,β-unsaturated aldehyde may be present in a corrosion-inhibiting additive of the present invention in an amount in the range of from about 1% to about 40% by weight of the additive. In certain embodiments, the α,β-unsaturated aldehyde may be present in a corrosion-inhibiting additive of the present invention in an amount of about 18% by weight of the additive. In certain embodiments, the α,β-unsaturated aldehyde may be present in a treatment fluid of the present invention in an amount in the range of from about 0.005% to about 0.8% by weight of the treatment fluid. A person of ordinary skill in the art, with the benefit of this disclosure, will recognize the type(s) and amount(s) of an α,β-unsaturated aldehyde to include in a particular corrosion-inhibiting additive or treatment fluid of the present invention depending on, among other things, the amount and/or type of acid(s) present in a particular application of the present invention, the composition of the remainder of the corrosion-inhibiting additive and/or treatment fluid used, the composition of the corrodible surface where the additive or treatment fluid of the present invention is used, temperature, the longevity of corrosion-inhibition desired, the degree of corrosion-inhibition desired, and the like.

The corrosion-inhibiting additives and treatment fluids of the present invention generally comprise an sulfur-containing compound that comprises one or more of thioglycolic acid, alkali metal thiosulfates, alkali metal thiosulfate hydrates, derivatives thereof, and combinations thereof. In certain embodiments, the sulfur-containing compound may be present in a corrosion-inhibiting additive of the present invention in an amount in the range of from about 1% to about 20% by weight of the additive. In certain embodiments, the sulfur-containing compound may be present in a corrosion-inhibiting additive of the present invention in an amount of about 9% by weight of the additive. In certain embodiments, the sulfur-containing compound may be present in a treatment fluid of the present invention in an amount in the range of from about 0.005% to about 0.4% by weight of the treatment fluid. A person of ordinary skill in the art, with the benefit of this disclosure, will recognize the type(s) and amount(s) of a sulfur-containing compound to include in a corrosion-inhibiting additive or treatment fluid of the present invention depending on, among other things, the amount and/or type of acid(s) present in a particular application of the present invention, the composition of the remainder of the corrosion-inhibiting additive and/or treatment fluid used, the composition of the corrodible surface where the additive or treatment fluid of the present invention is used, temperature, the longevity of corrosion-inhibition desired, the degree of corrosion-inhibition desired, and the like.

The corrosion-inhibiting additives and treatment fluids of the present invention generally comprise a nitrogen-containing surfactant, which may comprise any anionic, nonionic, amphoteric, and/or zwitterionic surfactant that comprises one or more nitrogen atoms known in the art, or any combination thereof. In certain embodiments, the nitrogen-containing surfactant may, *inter alia,* interact with one or more components of the treatment fluid or corrosion-inhibiting additive of the present invention so as to enhance the corrosion inhibition in comparison to that which could be achieved using the other components without a nitrogen-containing surfactant. Examples of nitrogen-containing surfactants that may be suitable for use in certain embodiments of the present invention include, but are not limited to, alkyl amide surfactants, amine oxide surfactants, derivatives thereof, and combinations thereof. In certain embodiments, the nitrogen-containing surfactant may be present in a corrosion-inhibiting additive of the present invention in an amount in the range of from about 1% to about 40% by weight of the additive. In certain embodiments, the nitrogen-containing surfactant may be present in a corrosion-inhibiting additive of the present invention in an amount of about 20% by weight of the additive. In certain embodiments, the nitrogen-containing surfactant may be present in a treatment fluid of the present invention in an amount in the range of from about 0.005% to about 0.8% by weight of the treatment fluid. A person of ordinary skill in the art, with the benefit of this disclosure, will recognize the type(s) and amount(s) of a nitrogen-containing surfactant to include in a corrosion-inhibiting additive or treatment fluid of the present invention depending on, among other things, the amount and/or type of acid(s) present in a particular application of the present invention, the composition of the remainder of the corrosion-inhibiting additive and/or treatment fluid used, the composition of the corrodible surface where the additive or treatment fluid of the present invention is used, temperature, the longevity of corrosion-inhibition desired, the degree of corrosion-inhibition desired, and the like.

In certain embodiments, the corrosion-inhibiting additives of the present invention may comprise one or more solvents, *inter alia,* to reduce the viscosity of those additives and/or to facilitate storage, handling, and/or use of those additives, for example, in incorporating the additive into a treatment fluid. The solvent may comprise any liquid in which at least some portion of another component of the corrosion-inhibiting additives of the present invention is at least partially soluble. Examples of solvents that may be suitable for use in certain embodiments of the present invention include, but are not limited to aqueous solvents (*e.g.,* water, freshwater, saltwater, brines, and the like), nonaqueous solvents (*e.g.*, butylglycidyl ether, dipropylene glycol methyl ether, butyl bottom alcohol, dipropylene glycol dimethyl ether, diethyleneglycol methyl ether, ethyleneglycol butyl ether, methanol, butyl alcohol, isopropyl alcohol, diethyleneglycol butyl ether, propylene carbonate, d-limonene, 2-butoxy ethanol, butyl acetate, furfuryl acetate, butyl lactate, dimethyl sulfoxide, dimethyl formamide, fatty acid methyl esters, and the like), derivatives thereof, and combinations thereof. When a solvent is used, it may be combined with one or more other components of the corrosion-inhibiting additives of the present invention immediately prior to use, or it may be combined with one or more of those components a longer period of time before use, and the corrosion-inhibiting additive comprising the solvent may be stored for some time as a solution before its use.

The treatment fluids of the present invention may comprise any treatment fluid known in the art (*e.g.,* treatment fluids suitable for use in subterranean formations). As used herein, the term "treatment fluid" refers to any fluid that may be used in an application in conjunction with a desired function and/or for a desired purpose. The term "treatment" does not imply any particular action by the fluid or any component thereof. The treatment fluids of the present invention generally comprise a base fluid and, in certain embodiments, comprise one or more acids.

The base fluid in a treatment fluid of the present invention may comprise any fluid that does not adversely interact with the other components used in accordance with this invention or with the subterranean formation. For example, the base fluid may be an aqueous base fluid, a hydrocarbon-based fluid (*e.g.,* kerosene, xylene, toluene, diesel, oils, etc.), a foamed fluid (*e.g.,* a liquid that comprises a gas), a gas (*e.g.,* nitrogen or carbon dioxide), or a combination thereof. Aqueous base fluids that may be suitable for use in certain embodiments of the treatment fluids of the present invention may comprise fresh water, saltwater (*e.g.,* water containing one or more salts dissolved therein), brine, seawater, or combinations thereof. Generally, the water may be from any source, provided that it does not contain components that might adversely affect the stability and/or performance of the treatment fluids of the present invention. In certain embodiments, the density of the aqueous base fluid can be adjusted, among other purposes, to provide additional particle transport and suspension in the treatment fluids of the present invention. In certain embodiments, the pH of the aqueous base fluid may be adjusted (*e.g.,* by a buffer or other pH adjusting agent), among other purposes, to reduce the viscosity of the treatment fluid (*e.g.*, activate a breaker or other additive). In these embodiments, the pH may be adjusted to a specific level, which may depend on, among other factors, the types of viscoelastic surfactants, gelling agents, acids, and other additives included in the treatment fluid. One of ordinary skill in the art, with the benefit of this disclosure, will recognize when such density and/or pH adjustments are appropriate.

The acid in the treatment fluids in certain embodiments of the present invention may comprise any acid known in the art, and may be naturally-occurring, synthetic, or some combination thereof. In certain embodiments, the acid may be included as a component of the treatment fluid intentionally to perform certain functions (*e.g.*, in an acidizing operation), or it may be included or generated in the treatment fluid as a by-product of other components of the fluid and/or from interaction with a subterranean formation in which the treatment fluid is used. The acid may comprise organic acids, inorganic acids, or a combination thereof. Examples of suitable organic acids may include, but are not limited to, formic acid, acetic acid, citric acid, glycolic acid, lactic acid, 3-hydroxypropionic acid, derivatives thereof, and combinations thereof. Examples of suitable inorganic acids may include, but are not limited to, hydrochloric acid, hydrofluoric acid, hydrobromic acid, sulfuric acid, phosphoric acid, nitric acid, derivatives thereof, and combinations thereof. When used in certain embodiments of the present invention, certain inorganic acids may produce by-products (*e.g.,* H₂S) that, among other things, may be hazardous, environmentally-harmful, or otherwise undesirable in certain applications of the present invention. A person of skill in the art, with the benefit of this disclosure, will recognize when certain inorganic acids may produce such by-products and if those by-products are undesirable in a particular operation, and will be able to determine how to manage or avoid the production of such by-products. The acid(s) may be present in the treatment fluids of the present invention in any amount that tends to promote the corrosion of a surface. In certain embodiments, the acid may be present in an amount in the range of from about 1% to about 50% by weight of the treatment fluid. In certain embodiments, the acid may be present in an amount in the range of from about 1% to about 35% by weight of the treatment fluid. In certain embodiments, the acid may be present in an amount in the range of from about 1% to about 25% by weight of the treatment fluid. In certain embodiments, the acid may be present in an amount in the range of from about 2.5% to about 25% by weight of the treatment fluid. In certain embodiments, the acid may be present in an amount of about 10% by weight of the treatment fluid.

The treatment fluids used in methods of the present invention optionally may comprise any number of additional additives, including, but not limited to, salts, additional surfactants (*e.g.,* non-ionic surfactants), additional fluid loss control additives, gas, nitrogen, carbon dioxide, surface modifying agents, tackifying agents, foamers, additional corrosion inhibitors, scale inhibitors, catalysts, clay control agents, biocides, friction reducers, antifoam agents, bridging agents, dispersants, flocculants, H₂S scavengers, CO₂ scavengers, oxygen scavengers, lubricants, viscosifiers, breakers, weighting agents, relative permeability modifiers, resins, particulate materials (*e.g.,* proppant particulates), wetting agents, coating enhancement agents, and the like. For example, in certain embodiments, additional corrosion inhibitors known in the art (*e.g.,* mercaptan-based compounds) may or may not be included in combination with the corrosion-inhibiting additives of the present invention, even if those conventional corrosion inhibitors have environmentally undesirable properties. As used herein, the term "mercaptan-based compound" is defined herein to include any organic compound containing the group -SH bonded to a carbon atom. However, in other embodiments, the treatment fluids and/or corrosion-inhibiting additives may be substantially free of mercaptan-based compounds. A person skilled in the art, with the benefit of this disclosure, will recognize the types of additional additives that may be included in the treatment fluids for a particular application of the present invention.

The corrosion-inhibiting additives and treatment fluids of the present invention and/or any component thereof may be provided in any form that is suitable for the particular application of the present invention. The different components of the corrosion-inhibiting additives and/or treatment fluids of the present invention may be provided and/or incorporated together (*e.g.,* in the same additive or fluid), or they may be provided and/or incorporated into a treatment fluid separately. For example, the α,β-unsaturated aldehyde and nitrogen-containing surfactant may be provided in one component, which subsequently may be combined with the sulfur-containing compound, optional solvent, and/or other components. Where they are provided and/or incorporated into a treatment fluid separately, the different components may be provided and/or incorporated simultaneously, or certain components may be provided and/or incorporated at some point in time before or after the other components are provided and/or incorporated. A person skilled in the art, with the benefit of this disclosure, will recognize that the order in which the different components are provided and/or incorporated may be altered to improve a desired characteristic. For example, the nitrogen-containing surfactant(s) may be provided and/or incorporated before other components, among other purposes, to minimize the risk of the treatment fluid separating into different phases.

The corrosion-inhibiting additives and treatment fluids of the present invention and/or any component thereof may be prepared at a job site, or they may be prepared at a plant or facility prior to use, and may be stored for some period of time prior to use. In certain embodiments, the preparation of the corrosion-inhibiting additives and treatment fluids of the present invention may be done at the job site in a method characterized as being performed "on the fly." The term "on-the-fly" is used herein to include methods of combining two or more components wherein a flowing stream of one element is continuously introduced into flowing stream of another component so that the streams are combined and mixed while continuing to flow as a single stream as part of an on-going treatment. Such mixing can also be described as "real-time" mixing. When components of the corrosion-inhibiting additives and treatment fluids of the present invention are combined at the job site, they may be combined before a corrosion-inhibiting additive or treatment fluid of the present invention is introduced into a subterranean formation, or they may be combined after one or more other components of the additive or treatment fluid have been introduced into the subterranean formation.

Certain embodiments of the methods of the present invention may involve inhibiting the corrosion of a portion of a surface in a subterranean formation. In one embodiment, the present invention provides a method comprising: providing a corrosion-inhibiting additive that comprises an α,β-unsaturated aldehyde, a sulfur-containing compound, and a nitrogen-containing surfactant; contacting a surface with the corrosion-inhibiting additive; and allowing the corrosion-inhibiting additive to interact with the surface, whereby corrosion of the surface is at least partially inhibited. The surfaces treated in certain embodiments of the present invention may include any surface susceptible to corrosion in an acidic environment. In certain embodiments, the surface may be a metal surface, for example, on a tool or pipe, a portion of which may or may not reside within a subterranean formation. In certain embodiments, the surface may be a metallic portion of the subterranean formation susceptible to corrosion. Examples of metals that may be present in these surfaces include, but are not limited to, ferrous metals, low alloy metals (*e.g.*, N-80 Grade), stainless steel (*e.g.*, 13 Cr), copper alloys, brass, nickel alloys, and duplex stainless steel alloys. Such surfaces may include downhole piping and downhole tools, as well as any other surface present in a subterranean formation. In certain of these embodiments, the treatment fluid or corrosion-inhibiting additive of the present invention (or any component thereof) may be sprayed onto the surface. In certain other embodiments, the surface to be treated may be submerged in a bath of the treatment fluid or corrosion-inhibiting additive of the present invention.

The methods, treatment fluids, and corrosion-inhibiting additives of the present invention may be used during or in preparation for any subterranean operation. Suitable subterranean operations may include, but are not limited to, preflush treatments, afterflush treatments, drilling operations, hydraulic fracturing treatments, sand control treatments (*e.g.*, gravel packing), acidizing treatments (*e.g.*, matrix acidizing or fracture acidizing), "frac-pack" treatments, well bore clean-out treatments, and other operations where a treatment fluid or corrosion-inhibiting additive of the present invention may be useful. In certain embodiments, a treatment fluid or corrosion-inhibiting additive of the present invention may be used in a method of stimulating a subterranean formation that comprises acid-soluble components, such as those present in carbonate and sandstone formations. In these methods, a treatment fluid comprising an acid (*e.g.*, a treatment fluid of the present invention) may be introduced into a subterranean formation and allowed to interact with acid-soluble components residing therein to at least partially dissolve those components. The treatment fluid then may be recovered by producing it to the surface, *e.g.*, "flowing back" the well, leaving a desirable amount of voids (*e.g.*, wormholes) within the formation, which, among other things, may enhance the formation's permeability and may increase the rate at which hydrocarbons subsequently may be produced from the formation. These acid stimulation treatments are referred to herein as "acidizing" a subterranean formation. In certain embodiments, the methods of the present invention comprise injecting a treatment fluid comprising an acid (*e.g.*, a treatment fluid of the present invention) into a subterranean formation at a pressure sufficient to create or enhance one or more fractures within the subterranean formation. In other embodiments, the methods of the present invention comprise injecting a treatment fluid comprising an acid (*e.g.,* a treatment fluid of the present invention) into a subterranean formation at a pressure below that which would create or enhance one or more fractures within the subterranean formation.

In certain other embodiments, the methods, treatment fluids, and/or corrosion-inhibiting additives of the present invention may be used in near well bore clean-out operations, wherein a treatment fluid of the present invention may be circulated in the subterranean formation, thereby suspending or solubilizing particulates residing in the formation. The treatment fluid then may be recovered out of the formation, carrying the suspended or solubilized particulates with it.

In certain embodiments, the methods, treatment fluids, and/or corrosion-inhibiting additives of the present invention may be used in construction and/or operation of pipelines that may be used, among other purposes, to transport treatment fluids and/or fluids produced from subterranean formations.

In certain embodiments, the treatment fluids and/or corrosion-inhibiting additives of the present invention may be used in subterranean or non-subterranean industrial cleaning operations. For example, in certain such cleaning operations, a treatment fluid of the present invention may be used to remove damage from a surface (*e.g.,* a metal surface) in a subterranean formation or any other surface where undesirable substances may be found (*e.g.,* metal surfaces of industrial tools, pipe materials, etc.). "Damage" may include boiler scale (*e.g.*, magnetite or copper) or any other undesirable substance. A person of ordinary skill in the art, with the benefit of this disclosure, will be able to recognize the presence of such damage and/or undesirable substances in a particular application of the present invention depending on, among other things, the operations to be performed on and/or using that surface, the composition of the surface, the composition of the substance, the amount of the substance (or extent of the damage), the properties of the substance, and the like. The treatment fluids, corrosion-inhibiting additives, and methods of the present invention, among other benefits, may remove the damage or undesirable substances, while minimizing the corrosion of the surface where the damage or undesirable substances are found and/or a surface contacted by a treatment fluid in the course of treating such damage or undesirable substances.

To facilitate a better understanding of the present invention, the following examples of certain aspects of some embodiments are given. In no way should the following examples be read to limit, or define, the scope of the invention.

### EXAMPLES

### EXAMPLE 1

Two N-80 Grade steel coupons were prepared according to the following procedure. First, the coupons were soaked in acetone to remove any foreign materials, and the coupons were inspected for burrs or other loosely-attached metal. Next, the coupons were bead blasted using coarse glass beads to remove any contaminants (*e.g.,* oxidation products or other materials lodged in areas with irregular surfaces). Finally, the coupons were then given an identification mark with a steel stamp. The coupons were weighed and then each suspended inside a separate glass test cell using a Teflon^{®} holder, which were then set inside small autoclaves (approximately 300 mL test volume) constructed with Hastelloy B-2^{™} alloy. The coupons were used in the testing procedure to follow immediately after preparation to reduce the possibility of contamination and/or oxidation.

Two sample fluids were prepared, each of which comprised an acetic acid solution (10% by weight of the final sample fluid) in water (88% by weight of the final sample fluid). A different corrosion-inhibiting additive was added to each of the sample fluids in an amount of 2% by weight of the final sample fluid. The corrosion-inhibiting additive of the present invention added to Sample Fluid 1 was comprised of the following components: ALKAMIDE O-281/E^{™} alkyl amide surfactant, available from Rhodia Inc., Cranbury, New Jersey (18.32% by weight), a 30% solution of a myristyl/cetyl amine oxide surfactant (18.32% by weight), *t*-cinnamaldehyde (18.32% by weight), propylene glycol (29.66% by weight), isopropyl alcohol (2.93% by weight), sodium thiosulfate hydrate (8.79% by weight), and a laureth-23 nonionic surfactant (3.66% by weight). The corrosion-inhibiting additive added to Sample Fluid 2 was FX2290 inhibitor, available from Nalco Company, Naperville, Illinois. Public information regarding this product indicates that it is comprised of *t*-cinnamaldehyde (5-10% by weight) and 2-mercaptoethyl alcohol (1-5% by weight).

100 mL of Sample Fluid 1 was placed in the test cell in one autoclave, and 100 mL of Sample Fluid 2 was placed in the test cell of another autoclave, and lids were placed on each of the test cells. Kerosene was poured into the autoclaves until only two or three of the threads inside the autoclaves were exposed above the level of the kerosene. The autoclaves were sealed and pressurized to 1000 psig using a gas cap of nitrogen, and then set inside the heating jacket. The autoclaves were then heated to 400°F using a Eurotherm controller. Pressure was maintained using a backpressure regulator assembly that allows automatic bleedoff of excess pressure developed from thermal expansion and corrosion. After 3 hours and 45 minutes (including time for increasing and reducing temperature), the autoclaves were removed from the heating jacket and placed in a sink with continuously running cold water. After cooling for 15 minutes, the autoclaves were depressurized. The steel coupons were then removed, cleaned, and weighed to determine the amounts of the steel coupons that had been lost to corrosion. The difference between the initial weight and the weight after testing for the coupon immersed in Sample Fluid 1 was 0.016 g. The difference between the initial weight and the weight after testing for the coupon immersed in Sample Fluid 2 was 0.023 g.

Therefore, Example 1 demonstrates that the treatment fluids and corrosion-inhibiting additives of the present invention may inhibit the corrosion of metal surfaces more effectively than conventional corrosion inhibitors.

### EXAMPLE 2

Two 13Cr Grade steel coupons were prepared according to the procedure set forth in Example 1. The coupons were weighed and then each suspended inside a separate glass test cells using a Teflon^{®} holder, which were then set inside small autoclaves (approximately 300 mL test volume) constructed with Hastelloy B-2^{™} alloy. The coupons were used in the testing procedure to follow immediately after preparation to reduce the possibility of contamination and/or oxidation.

Two sample fluids were prepared, each of which comprised a formic acid solution (10% by weight of the final sample fluid) in water (89.5% by weight of the final sample fluid). A different corrosion-inhibiting additive was added to each of the sample fluids in an amount of 0.5% by weight of the final sample fluid. The corrosion-inhibiting additive of the present invention added to Sample Fluid 3 was comprised of the following components: ALKAMIDE O-281/E^{™} alkyl amide surfactant, available from Rhodia Inc., Cranbury, New Jersey (18.32% by weight), a 30% solution of a myristyl/cetyl amine oxide surfactant (18.32% by weight), *t*-cinnamaldehyde (18.32% by weight), propylene glycol (29.66% by weight), isopropyl alcohol (2.93% by weight), sodium thiosulfate hydrate (8.79% by weight), and a laureth-23 nonionic surfactant (3.66% by weight). The corrosion-inhibiting additive added to Sample Fluid 4 was FX2290 inhibitor, available from Nalco Company, Naperville, Illinois. Public information regarding this product indicates that it is comprised of *t*-cinnamaldehyde (5-10% by weight) and pyridine quat 2-mercaptoethyl alcohol (1-5% by weight).

100 mL of Sample Fluid 3 was placed in the test cell in one autoclave, and 100 mL of Sample Fluid 4 was placed in the test cell in another autoclave, and lids were placed on each of the test cells. Kerosene was poured into the autoclaves until only two or three of the threads inside the autoclaves were exposed above the level of the kerosene. The autoclaves were sealed and pressurized to 1000 psig using a gas cap of nitrogen, and then set inside the heating jacket. The autoclaves were then heated to 200°F using a Eurotherm controller. Pressure was maintained using a backpressure regulator assembly that allows automatic bleedoff of excess pressure developed from thermal expansion and corrosion. After 23 hours and 45 minutes (including time for increasing and reducing temperature), the autoclaves were removed from the heating jacket and placed in a sink with continuously running cold water. After cooling for 15 minutes, the autoclaves were depressurized. The steel coupons were then removed, cleaned, and weighed to determine the amounts of the steel coupons that had been lost to corrosion. The difference between the initial weight and the weight after testing for the coupon immersed in Sample Fluid 3 was 0.011 g. The difference between the initial weight and the weight after testing for the coupon immersed in Sample Fluid 4 was 0.025 g.

Therefore, Example 2 demonstrates that the treatment fluids and corrosion-inhibiting additives of the present invention may inhibit the corrosion of metal surfaces more effectively than conventional corrosion inhibitors.

### EXAMPLE 3

Three N-80 Grade steel coupons were prepared according to the procedure set forth in Example 1. The coupons were weighed and then each suspended inside a separate glass test cell using a Teflon^{®} holder, which were then set inside small autoclaves (approximately 300 mL test volume) constructed with Hastelloy B-2^{™} alloy. The coupons were used in the testing procedure to follow immediately after preparation to reduce the possibility of contamination and/or oxidation.

Three sample fluids were prepared, each of which comprised an acetic acid solution (10% by weight of the final sample fluid) in water (88% by weight of the final sample fluid). A different corrosion-inhibiting additive was added to each of the sample fluids in an amount of 2% by weight of the final sample fluid. The corrosion-inhibiting additive of the present invention added to Sample Fluid 5 was comprised of the following components: *t*-cinnamaldehyde (18.32% by weight), propylene glycol (66.34% by weight), isopropyl alcohol (6.55% by weight), and sodium thiosulfate hydrate (8.79% by weight). The corrosion-inhibiting additive of the present invention added to Sample Fluid 6 was comprised of the following components: a 30% solution of a myristyl/cetyl amine oxide surfactant (18.32% by weight) (18.32% by weight), *t*-cinnamaldehyde (18.32% by weight), propylene glycol (49.66% by weight), isopropyl alcohol (4.91% by weight), and sodium thiosulfate hydrate (8.79% by weight). The corrosion-inhibiting additive of the present invention added to Sample Fluid 7 was comprised of the following components: ALKAMIDE O-281/E^{™} alkyl amide surfactant, available from Rhodia Inc., Cranbury, New Jersey (18.32% by weight), *t*-cinnamaldehyde (18.32% by weight), propylene glycol (49.66% by weight), isopropyl alcohol (4.91% by weight), and sodium thiosulfate hydrate (8.79% by weight).

100 mL of Sample Fluid 5 was placed in the test cell in one autoclave, 100 mL of Sample Fluid 6 was placed in the test cell in another autoclave, and 100 mL of Sample Fluid 7 was placed in the test cell in a third autoclave. Lids were placed on each of the test cells. Kerosene was poured into the autoclaves until only two or three of the threads inside the autoclaves were exposed above the level of the kerosene. The autoclaves were sealed and pressurized to 1000 psig using a gas cap of nitrogen, and then set inside the heating jacket. The autoclaves were then heated to 400°F using a Eurotherm controller. Pressure was maintained using a backpressure regulator assembly that allows automatic bleedoff of excess pressure developed from thermal expansion and corrosion. After 3 hours and 45 minutes (including time for increasing and reducing temperature), the autoclaves were removed from the heating jacket and placed in a sink with continuously running cold water. After cooling for 15 minutes, the autoclaves were depressurized. The steel coupons were then removed, cleaned, and weighed to determine the amounts of the steel coupons that had been lost to corrosion. The difference between the initial weight and the weight after testing for the coupon immersed in Sample Fluid 5 was 0.147 g. The difference between the initial weight and the weight after testing for the coupon immersed in Sample Fluid 6 was 0.007 g. The difference between the initial weight and the weight after testing for the coupon immersed in Sample Fluid 7 was 0.012 g.

Therefore, Example 3 demonstrates that treatment fluids and corrosion-inhibiting additives of the present invention wherein the nitrogen-containing surfactant comprises a combination of alkyl amide surfactants and amine oxide surfactants may inhibit the corrosion of metal surfaces more effectively than treatment fluids and corrosion-inhibiting additives that comprise only one or neither of those surfactants.

Therefore, the present invention is well adapted to attain the ends and advantages mentioned as well as those that are inherent therein. The particular embodiments disclosed above are illustrative only, as the present invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular illustrative embodiments disclosed above may be altered or modified and all such variations are considered within the scope and spirit of the present invention. In particular, every range of values (of the form, "from about a to about b," or, equivalently, "from approximately a to b," or, equivalently, "from approximately a-b") disclosed herein is to be understood as referring to the power set (the set of all subsets) of the respective range of values, and set forth every range encompassed within the broader range of values. Also, the terms in the claims have their plain, ordinary meaning unless otherwise explicitly and clearly defined by the patentee.

The invention will now be described by reference to the following statements. These statements are numbered but are not claims. These statements relate to the claims of the parent application and are included for completeness to preserve all subject matter.

According to one aspect, the present invention is described as in statement 1.
Statement 1: A treatment fluid comprising: a base fluid; an α,β-unsaturated aldehyde; a sulfur-containing compound; and a nitrogen-containing surfactant that is anionic, nonionic, amphoteric, or zwitterionic.
   Some embodiments of the invention are described below in statements 2 to 10.
Statement 2: A treatment fluid according to statement 1, further comprising one or more acids.
Statement 3: A treatment fluid according to statement 2, wherein the acid is present in the treatment fluid in an amount in the range of from about 2.5% to about 25% by weight of the treatment fluid.
Statement 4: A treatment fluid according to statement 1 wherein the treatment fluid is substantially free of mercaptan-based compounds.
Statement 5: A treatment fluid according to statement 1 wherein the sulfur-containing compound is selected from the group consisting of thioglycolic acid, alkali metal thiosulfates, alkali metal thiosulfate hydrates, derivatives thereof, and combinations thereof.
Statement 6: A treatment fluid according to statement 1 wherein the nitrogen-containing surfactant is selected from the group consisting of alkyl amide surfactants, amine oxide surfactants, derivatives thereof, and combinations thereof.
Statement 7: A treatment fluid according to statement 1 wherein the α,β-unsaturated aldehyde is selected from the group consisting of cinnamaldehyde, *t*-cinnamaldehyde, crotonaldehyde, acrolein, methacrolein, leafaldehyde, citral, furfural, (E)-2-methyl-2-butenal, 3-methyl-2-butenal, (E)-2-ethyl-2-butenal, (E)-2-ethyl-2-hexenal, 2-hexenal, 2-heptenal, 2-octenal, 2-nonenal, 2-decenal, 2-undecenal, 2-dodecenal, 2,4-hexadienal, 2,4-heptadienal, 2,4-octadienal, 2,4-nonadienal, 2,4-decadienal, 2,4-undecadienal, 2,4-dodecadienal, 2,6-dodecadienal, 1-formyl-[2-(2-methylvinyl)]-2-n-octylethylene, dicinnamaldehyde, p-hydroxycinnamaldehyde, p-methylcinnamaldehyde, p-ethylcinnamaldehyde, p-methoxycinnamaldehyde, p-dimethylaminocinnamaldehyde, p-diethylaminocinnamaldehyde, p-nitrocinnamaldehyde, o-nitrocinnamaldehyde, o-allyloxycinnamaldehyde, 4-(3-propenal)cinnamaldehyde, p-sodium sulfocinnamaldehyde, p-trimethylammoniumcinnamaldehyde sulfate, p-trimethylammoniumcinnamaldehyde o-methylsulfate, p-thiocyanocinnamaldehyde, p-(S-acetyl)thiocinnamaldehyde, p-(S-N,N-dimethylcarbamoylthio)cinnamaldehyde, p-chlorocinnamaldehyde, 5-phenyl-2,4-pentadienal, 5-(p-methoxyphenyl)-2,4-pentadienal, 2,3-diphenylacrolein, 3,3-diphenylacrolein, α-methylcinnamaldehyde, β-methylcinnamaldehyde, α -chlorocinnamaldehyde, α - bromocinnamaldehyde, α -butylcinnamaldehyde, α -amylcinnamaldehyde, α - hexylcinnamaldehyde, 2-(p-methylbenzylidine)decanal, α-bromo-p-cyanocinnamaldehyde, α -ethyl-p-methylcinnamaldehyde, p-methyl-α -pentylcinnamaldehyde, 3,4-dimethoxy- α - methylcinnamaldehyde, α -[(4-methylphenyl)methylene]benzeneacetaldehyde, α-(hydroxymethylene)-4-methylbenzylacetaldehyde, 4-chloro- α - (hydroxymethylene)benzeneacetaldehyde, α-nonylidenebenzeneacetaldehyde, derivatives thereof, and combinations thereof.
Statement 8: A treatment fluid according to statement 1 wherein: the α,β-unsaturated aldehyde is present in an amount in the range of from about 0.005% to about 0.8% by weight of the treatment fluid; the sulfur-containing compound is present in an amount in the range of from about 0.005% to about 0.4% by weight of the treatment fluid; and the nitrogen-containing surfactant is present in an amount in the range of from about 0.005% to about 0.8% by weight of the treatment fluid.
Statement 9: A treatment fluid according to statement 1 wherein the base fluid is selected from the group consisting of aqueous based fluids, hydrocarbon-based fluids, foamed fluids, gases, and combinations thereof.
Statement 10: A treatment fluid according to statement 1 further comprising one or more additional additives selected from the group consisting of salts, surfactants, fluid loss control additives, gas, nitrogen, carbon dioxide, surface modifying agents, tackifying agents, foamers, additional corrosion inhibitors, scale inhibitors, catalysts, clay control agents, biocides, friction reducers, antifoam agents, bridging agents, dispersants, flocculants, H₂S scavengers, CO₂ scavengers, oxygen scavengers, lubricants, viscosifiers, breakers, weighting agents, relative permeability modifiers, resins, particulate materials, proppant particulates, wetting agents, coating enhancement agents, and combinations thereof.
   According to one aspect, the present invention is described as in statement 11.
Statement 11: A corrosion-inhibiting additive comprising: an α,β-unsaturated aldehyde; a sulfur-containing compound; and a nitrogen-containing surfactant that is anionic, nonionic, amphoteric, or zwitterionic.
   Some embodiments of the invention are described below in statements 12 to 16.
Statement 12: A corrosion-inhibiting additive according to statement 10 wherein the nitrogen-containing surfactant is selected from the group consisting of alkyl amide surfactants, amine oxide surfactants, derivatives thereof, and combinations thereof.
Statement 13: A corrosion-inhibiting additive according to statement 10 wherein the α,β-unsaturated aldehyde is present in an amount of about 18% by weight of the corrosion-inhibiting additive; the sulfur-containing compound is present in an amount of about 9% by weight of the corrosion-inhibiting additive; and the nitrogen-containing surfactant is present in an amount of about 20% by weight of the corrosion-inhibiting additive.
Statement 14: A corrosion-inhibiting additive according to statement 10 wherein the α,β-unsaturated aldehyde is selected from the group consisting of cinnamaldehyde, *t-*cinnamaldehyde, crotonaldehyde, acrolein, methacrolein, leafaldehyde, citral, furfural, (E)-2-methyl-2-butenal, 3-methyl-2-butenal, (E)-2-ethyl-2-butenal, (E)-2-ethyl-2-hexenal, 2-hexenal, 2-heptenal, 2-octenal, 2-nonenal, 2-decenal, 2-undecenal, 2-dodecenal, 2,4-hexadienal, 2,4-heptadienal, 2,4-octadienal, 2,4-nonadienal, 2,4-decadienal, 2,4-undecadienal, 2,4-dodecadienal, 2,6-dodecadienal, 1-formyl-[2-(2-methylvinyl)]-2-n-octylethylene, dicinnamaldehyde, p-hydroxycinnamaldehyde, p-methylcinnamaldehyde, p-ethylcinnamaldehyde, p-methoxycinnamaldehyde, p-dimethylaminocinnamaldehyde, p-diethylaminocinnamaldehyde, p-nitrocinnamaldehyde, o-nitrocinnamaldehyde, o-allyloxycinnamaldehyde, 4-(3-propenal)cinnamaldehyde, p-sodium sulfocinnamaldehyde, p-trimethylammoniumcinnamaldehyde sulfate, p-trimethylammoniumcinnamaldehyde o-methylsulfate, p-thiocyanocinnamaldehyde, p-(S-acetyl)thiocinnamaldehyde, p-(S-N,N-dimethylcarbamoylthio)cinnamaldehyde, p-chlorocinnamaldehyde, 5-phenyl-2,4-pentadienal, 5-(p-methoxyphenyl)-2,4-pentadienal, 2,3-diphenylacrolein, 3,3-diphenylacrolein, α-methylcinnamaldehyde, β-methylcinnamaldehyde, α -chlorocinnamaldehyde, α-bromocinnamaldehyde, α -butylcinnamaldehyde, α -amylcinnamaldehyde, α - hexylcinnamaldehyde, 2-(p-methylbenzylidine)decanal, α-bromo-p-cyanocinnamaldehyde, α -ethyl-p-methylcinnamaldehyde, p-methyl-α -pentylcinnamaldehyde, 3,4-dimethoxy- α - methylcinnamaldehyde, α -[(4-methylphenyl)methylene]benzeneacetaldehyde, α-(hydroxymethylene)-4-methylbenzylacetaldehyde, 4-chloro- α - (hydroxymethylene)benzeneacetaldehyde, α-nonylidenebenzeneacetaldehyde, derivatives thereof, and combinations thereof.
Statement 15: A corrosion-inhibiting additive according to statement 10 further comprising a solvent.
Statement 16: A corrosion-inhibiting additive according to statement 14 wherein the solvent is selected from the group consisting of water, freshwater, saltwater, brines, butylglycidyl ether, dipropylene glycol methyl ether, butyl bottom alcohol, dipropylene glycol dimethyl ether, diethyleneglycol methyl ether, ethyleneglycol butyl ether, methanol, butyl alcohol, isopropyl alcohol, diethyleneglycol butyl ether, propylene carbonate, d-limonene, 2-butoxy ethanol, butyl acetate, furfuryl acetate, butyl lactate, dimethyl sulfoxide, dimethyl formamide, fatty acid methyl esters, derivatives thereof, and combinations thereof.
   According to one aspect, the present invention is described as in statement 17.
Statement 17: A corrosion-inhibiting additive system comprising: a first component that comprises an α,β-unsaturated aldehyde and a nitrogen-containing surfactant that is anionic, nonionic, amphoteric, or zwitterionic; and a second component that comprises a sulfur-containing compound.
   Some embodiments of the invention are described below in statements 18 to 20.
Statement 18: A corrosion-inhibiting additive system according to statement 16 wherein the α,β-unsaturated aldehyde is selected from the group consisting of cinnamaldehyde, *t-*cinnamaldehyde, crotonaldehyde, acrolein, methacrolein, leafaldehyde, citral, furfural, (E)-2-methyl-2-butenal, 3-methyl-2-butenal, (E)-2-ethyl-2-butenal, (E)-2-ethyl-2-hexenal, 2-hexenal, 2-heptenal, 2-octenal, 2-nonenal, 2-decenal, 2-undecenal, 2-dodecenal, 2,4-hexadienal, 2,4-heptadienal, 2,4-octadienal, 2,4-nonadienal, 2,4-decadienal, 2,4-undecadienal, 2,4-dodecadienal, 2,6-dodecadienal, 1-formyl-[2-(2-methylvinyl)]-2-n-octylethylene, dicinnamaldehyde, p-hydroxycinnamaldehyde, p-methylcinnamaldehyde, p-ethylcinnamaldehyde, p-methoxycinnamaldehyde, p-dimethylaminocinnamaldehyde, p-diethylaminocinnamaldehyde, p-nitrocinnamaldehyde, o-nitrocinnamaldehyde, o-allyloxycinnamaldehyde, 4-(3-propenal)cinnamaldehyde, p-sodium sulfocinnamaldehyde, p-trimethylammoniumcinnamaldehyde sulfate, p-trimethylammoniumcinnamaldehyde o-methylsulfate, p-thiocyanocinnamaldehyde, p-(S-acetyl)thiocinnamaldehyde, p-(S-N,N-dimethylcarbamoylthio)cinnamaldehyde, p-chlorocinnamaldehyde, 5-phenyl-2,4-pentadienal, 5-(p-methoxyphenyl)-2,4-pentadienal, 2,3-diphenylacrolein, 3,3-diphenylacrolein, α-methylcinnamaldehyde, β-methylcinnamaldehyde, α -chlorocinnamaldehyde, α-bromocinnamaldehyde, α -butylcinnamaldehyde, α -amylcinnamaldehyde, α - hexylcinnamaldehyde, 2-(p-methylbenzylidine)decanal, α-bromo-p-cyanocinnamaldehyde, α -ethyl-p-methylcinnamaldehyde, p-methyl- α -pentylcinnamaldehyde, 3,4-dimethoxy-α-methylcinnamaldehyde, α -[(4-methylphenyl)methylene]benzeneacetaldehyde, α-(hydroxymethylene)-4-methylbenzylacetaldehyde, 4-chloro- α - (hydroxymethylene)benzeneacetaldehyde, α-nonylidenebenzeneacetaldehyde, derivatives thereof, and combinations thereof.
Statement 19: A corrosion-inhibiting additive system according to statement 16 wherein at least one of the first and second components further comprises a solvent.
Statement 20: A corrosion-inhibiting additive system according to statement 18 wherein the solvent is selected from the group consisting of water, freshwater, saltwater, brines, butylglycidyl ether, dipropylene glycol methyl ether, butyl bottom alcohol, dipropylene glycol dimethyl ether, diethyleneglycol methyl ether, ethyleneglycol butyl ether, methanol, butyl alcohol, isopropyl alcohol, diethyleneglycol butyl ether, propylene carbonate, d-limonene, 2-butoxy ethanol, butyl acetate, furfuryl acetate, butyl lactate, dimethyl sulfoxide, dimethyl formamide, fatty acid methyl esters, derivatives thereof, and combinations thereof. According to one aspect, the present invention is described as in statement 21.
Statement 21: A method comprising: providing a treatment fluid that comprises a base fluid, an α,β-unsaturated aldehyde, a sulfur-containing compound, and at least one nitrogen-containing surfactant that is anionic, nonionic, amphoteric, or zwitterionic; and introducing the treatment fluid into a subterranean formation.
   Some embodiments of the invention are described below in statements 22 to 30.
Statement 22: A method according to statement 21 wherein the treatment fluid is substantially free of mercaptan-based compounds.
Statement 23: A method according to statement 21 wherein the sulfur-containing compound is selected from the group consisting of thioglycolic acid, alkali metal thiosulfates, alkali metal thiosulfate hydrates, derivatives thereof, and combinations thereof.
Statement 24: A method according to statement 21 wherein the nitrogen-containing surfactant is selected from the group consisting of alkyl amide surfactants, amine oxide surfactants, derivatives thereof, and combinations thereof.
Statement 25: A method according to statement 21 wherein the α,β-unsaturated aldehyde is selected from the group consisting of cinnamaldehyde, *t*-cinnamaldehyde, crotonaldehyde, acrolein, methacrolein, leafaldehyde, citral, furfural, (E)-2-methyl-2-butenal, 3-methyl-2-butenal, (E)-2-ethyl-2-butenal, (E)-2-ethyl-2-hexenal, 2-hexenal, 2-heptenal, 2-octenal, 2-nonenal, 2-decenal, 2-undecenal, 2-dodecenal, 2,4-hexadienal, 2,4-heptadienal, 2,4-octadienal, 2,4-nonadienal, 2,4-decadienal, 2,4-undecadienal, 2,4-dodecadienal, 2,6-dodecadienal, 1-formyl-[2-(2-methylvinyl)]-2-n-octylethylene, dicinnamaldehyde, p-hydroxycinnamaldehyde, p-methylcinnamaldehyde, p-ethylcinnamaldehyde, p-methoxycinnamaldehyde, p-dimethylaminocinnamaldehyde, p-diethylaminocinnamaldehyde, p-nitrocinnamaldehyde, o-nitrocinnamaldehyde, o-allyloxycinnamaldehyde, 4-(3-propenal)cinnamaldehyde, p-sodium sulfocinnamaldehyde, p-trimethylammoniumcinnamaldehyde sulfate, p-trimethylammoniumcinnamaldehyde o-methylsulfate, p-thiocyanocinnamaldehyde, p-(S-acetyl)thiocinnamaldehyde, p-(S-N,N-dimethylcarbamoylthio)cinnamaldehyde, p-chlorocinnamaldehyde, 5-phenyl-2,4-pentadienal, 5-(p-methoxyphenyl)-2,4-pentadienal, 2,3-diphenylacrolein, 3,3-diphenylacrolein, α-methylcinnamaldehyde, β-methylcinnamaldehyde, α -chlorocinnamaldehyde, α-bromocinnamaldehyde, α -butylcinnamaldehyde, α -amylcinnamaldehyde, α - hexylcinnamaldehyde, 2-(p-methylbenzylidine)decanal, α-bromo-p-cyanocinnamaldehyde, α -ethyl-p-methylcinnamaldehyde, p-methyl-α -pentylcinnamaldehyde, 3,4-dimethoxy- α - methylcinnamaldehyde, α -[(4-methylphenyl)methylene]benzeneacetaldehyde, α-(hydroxymethylene)-4-methylbenzylacetaldehyde, 4-chloro- α - (hydroxymethylene)benzeneacetaldehyde, α-nonylidenebenzeneacetaldehyde, derivatives thereof, and combinations thereof.
Statement 26: A method according to statement 21 wherein the treatment fluid comprises one or more acids.
Statement 27: A method according to statement 26 wherein the acid is present in the treatment fluid in an amount in the range of from about 2.5% to about 25% by weight of the treatment fluid.
Statement 28: A method according to statement 26 further comprising: allowing the acid in the treatment fluid to interact with one or more acid-soluble components in the subterranean formation, whereby at least a portion of the acid-soluble components are dissolved. Statement 29: A method according to statement 21 wherein: the α,β-unsaturated aldehyde is present in an amount in the range of from about 0.005% to about 0.8% by weight of the treatment fluid; the sulfur-containing compound is present in an amount in the range of from about 0.005% to about 0.4% by weight of the treatment fluid; and the nitrogen-containing surfactant is present in an amount in the range of from about 0.005% to about 0.8% by weight of the treatment fluid.
Statement 30: A method according to statement 21 wherein providing the treatment fluid comprises: providing a first component that comprises the base fluid, the α,β-unsaturated aldehyde and the nitrogen-containing surfactant; providing a second component that comprises the sulfur-containing compound; and mixing the first and second components to form the treatment fluid.
   According to one aspect, the present invention is described as in statement 31.
Statement 31: A method comprising: providing a corrosion-inhibiting additive that comprises an α,β-unsaturated aldehyde, a sulfur-containing compound, and at least one nitrogen-containing surfactant that is anionic, nonionic, amphoteric, or zwitterionic; contacting a surface with the corrosion-inhibiting additive; and allowing the corrosion-inhibiting additive to interact with the surface, whereby corrosion of the surface is at least partially inhibited.
   Some embodiments of the invention are described below in statements 32 to 37.
Statement 32: A method according to statement 31 wherein providing the corrosion-inhibiting additive comprises: providing a first component that comprises the α,β-unsaturated aldehyde and the nitrogen-containing surfactant; providing a second component that comprises the sulfur-containing compound; and mixing the first and second components to form the corrosion-inhibiting additive.
Statement 33: A method according to statement 31 wherein the corrosion-inhibiting additive further comprises a solvent.
Statement 34: A method according to statement 31 wherein: the α,β-unsaturated aldehyde is present in an amount of about 18% by weight of the corrosion-inhibiting additive; the sulfur-containing compound is present in an amount of about 9% by weight of the corrosion-inhibiting additive; and the nitrogen-containing surfactant is present in an amount of about 20% by weight of the corrosion-inhibiting additive.
Statement 35: A method according to statement 31 wherein the surface at least partially resides within a subterranean formation.
Statement 36: A method according to statement 31 wherein the surface comprises a surface on a tool or pipe.
Statement 37: A method according to statement 31 wherein the surface comprises a material selected from the group consisting of ferrous metals, low alloy metals, stainless steel, copper alloys, brass, nickel alloys, duplex stainless steel alloys, derivatives thereof, and combinations thereof.
   According to one aspect, the present invention is described as in statement 38.
Statement 38: A method comprising: providing a treatment fluid that comprises a base fluid, an α,β-unsaturated aldehyde, a sulfur-containing compound, and at least one nitrogen-containing surfactant that is anionic, nonionic, amphoteric, or zwitterionic; providing a surface wherein an undesirable substance resides on the surface; and allowing the treatment fluid to contact the surface so that at least a portion of the undesirable substance is removed.
   Some embodiments of the invention are described below in statements 39 to 40.
Statement 39: A method according to statement 38 wherein providing the treatment fluid comprises: providing a first component that comprises the base fluid, the α,β-unsaturated aldehyde and the nitrogen-containing surfactant; providing a second component that comprises the sulfur-containing compound; and mixing the first and second components to form the treatment fluid.
Statement 40: A method according to statement 38 wherein the treatment fluid further comprises an acid.

## Claims

1. A corrosion-inhibiting additive system comprising:
a first component that comprises an α,β-unsaturated aldehyde and a nitrogen-containing surfactant that is anionic, nonionic, amphoteric, or zwitterionic; and
a second component that comprises a sulfur-containing compound.

2. A corrosion-inhibiting additive system according to claim 1 wherein the α,β-unsaturated aldehyde is selected from the group consisting of cinnamaldehyde, *t-*cinnamaldehyde, crotonaldehyde, acrolein, methacrolein, leafaldehyde, citral, furfural, (E)-2-methyl-2-butenal, 3-methyl-2-butenal, (E)-2-ethyl-2-butenal, (E)-2-ethyl-2-hexenal, 2-hexenal, 2-heptenal, 2-octenal, 2-nonenal, 2-decenal, 2-undecenal, 2-dodecenal, 2,4-hexadienal, 2,4-heptadienal, 2,4-octadienal, 2,4-nonadienal, 2,4-decadienal, 2,4-undecadienal, 2,4-dodecadienal, 2,6-dodecadienal, 1-formyl-[2-(2-methylvinyl)]-2-n-octylethylene, dicinnamaldehyde, p-hydroxycinnamaldehyde, p-methylcinnamaldehyde, p-ethylcinnamaldehyde, p-methoxycinnamaldehyde, p-dimethylaminocinnamaldehyde, p-diethylaminocinnamaldehyde, p-nitrocinnamaldehyde, o-nitrocinnamaldehyde, o-allyloxycinnamaldehyde, 4-(3-propenal)cinnamaldehyde, p-sodium sulfocinnamaldehyde, p-trimethylammoniumcinnamaldehyde sulfate, p-trimethylammoniumcinnamaldehyde o-methylsulfate, p-thiocyanocinnamaldehyde, p-(S-acetyl)thiocinnamaldehyde, p-(S-N,N-dimethylcarbamoylthio)cinnamaldehyde, p-chlorocinnamaldehyde, 5-phenyl-2,4-pentadienal, 5-(p-methoxyphenyl)-2,4-pentadienal, 2,3-diphenylacrolein, 3,3-diphenylacrolein, α-methylcinnamaldehyde, β-methylcinnamaldehyde, α -chlorocinnamaldehyde, α-bromocinnamaldehyde, α -butylcinnamaldehyde, α -amylcinnamaldehyde, α - hexylcinnamaldehyde, 2-(p-methylbenzylidine)decanal, α-bromo-p-cyanocinnamaldehyde, α -ethyl-p-methylcinnamaldehyde, p-methyl-α -pentylcinnamaldehyde, 3,4-dimethoxy- α - methylcinnamaldehyde, α -[(4-methylphenyl)methylene]benzeneacetaldehyde, α-(hydroxymethylene)-4-methylbenzylacetaldehyde, 4-chloro- α - (hydroxymethylene)benzeneacetaldehyde, α-nonylidenebenzeneacetaldehyde, derivatives thereof, and combinations thereof.

3. A corrosion-inhibiting additive system according to claim 1 wherein at least one of the first and second components further comprises a solvent.

4. A corrosion-inhibiting additive system according to claim 3 wherein the solvent is selected from the group consisting of water, freshwater, saltwater, brines, butylglycidyl ether, dipropylene glycol methyl ether, butyl bottom alcohol, dipropylene glycol dimethyl ether, diethyleneglycol methyl ether, ethyleneglycol butyl ether, methanol, butyl alcohol, isopropyl alcohol, diethyleneglycol butyl ether, propylene carbonate, d-limonene, 2-butoxy ethanol, butyl acetate, furfuryl acetate, butyl lactate, dimethyl sulfoxide, dimethyl formamide, fatty acid methyl esters, derivatives thereof, and combinations thereof.

5. A method comprising:
providing a corrosion-inhibiting additive that comprises an α,β-unsaturated aldehyde, a sulfur-containing compound, and at least one nitrogen-containing surfactant that is anionic, nonionic, amphoteric, or zwitterionic;
contacting a surface with the corrosion-inhibiting additive; and
allowing the corrosion-inhibiting additive to interact with the surface, whereby corrosion of the surface is at least partially inhibited.

6. A method according to claim 5 wherein providing the corrosion-inhibiting additive comprises:
providing a first component that comprises the α,β-unsaturated aldehyde and the nitrogen-containing surfactant;
providing a second component that comprises the sulfur-containing compound; and
mixing the first and second components to form the corrosion-inhibiting additive.

7. A method according to claim 5 wherein the corrosion-inhibiting additive further comprises a solvent.

8. A method according to claim 5 wherein:
the α,β-unsaturated aldehyde is present in an amount of about 18% by weight of the corrosion-inhibiting additive;
the sulfur-containing compound is present in an amount of about 9% by weight of the corrosion-inhibiting additive; and
the nitrogen-containing surfactant is present in an amount of about 20% by weight of the corrosion-inhibiting additive.

9. A method according to claim 5 wherein the surface at least partially resides within a subterranean formation.

10. A method according to claim 5 wherein the surface comprises a surface on a tool or pipe.

11. A method according to claim 5 wherein the surface comprises a material selected from the group consisting of ferrous metals, low alloy metals, stainless steel, copper alloys, brass, nickel alloys, duplex stainless steel alloys, derivatives thereof, and combinations thereof.

12. A method comprising:
providing a treatment fluid that comprises a base fluid, an α,β-unsaturated aldehyde, a sulfur-containing compound, and at least one nitrogen-containing surfactant that is anionic, nonionic, amphoteric, or zwitterionic;
providing a surface wherein an undesirable substance resides on the surface;
and
allowing the treatment fluid to contact the surface so that at least a portion of the undesirable substance is removed.

13. A method according to claim 12 wherein providing the treatment fluid comprises:
providing a first component that comprises the base fluid, the α,β-unsaturated aldehyde and the nitrogen-containing surfactant;
providing a second component that comprises the sulfur-containing compound; and
mixing the first and second components to form the treatment fluid.

14. A method according to claim 12 wherein the treatment fluid further comprises an acid.
